Europäisches Patentamt

European Patent Office

Office européen des brevets

(19)

(11) Veröffentlichungsnummer: **0 294 708 B1**

(12) **EUROPÄISCHE PATENTSCHRIFT**

(45) Veröffentlichungstag der Patentschrift: **16.10.91**

(51) Int. Cl.⁵: **B01J 20/28**

(21) Anmeldenummer: **88108841.3**

(22) Anmeldetag: **02.06.88**

(54) **Verfahren zur Herstellung eines Filtermaterials.**

(30) Priorität: **11.06.87 DE 3719418**

(43) Veröffentlichungstag der Anmeldung:
**14.12.88 Patentblatt 88/50**

(45) Bekanntmachung des Hinweises auf die
Patenterteilung:
**16.10.91 Patentblatt 91/42**

(84) Benannte Vertragsstaaten:
**CH DE FR GB IT LI NL SE**

(56) Entgegenhaltungen:
**EP-A- 0 159 696**
**DE-B- 2 804 154**
**US-A- 4 081 501**
**US-A- 4 190 696**

(73) Patentinhaber: **HELSA-WERKE Helmut Sandler
GmbH & Co. KG
Bayreuther Strasse 3-5
W-8586 Gefrees(DE)**

(72) Erfinder: **Smolik, Klaus
Schamlesberg 11
W-8586 Gefrees(DE)**

(74) Vertreter: **LOUIS, PÖHLAU, LOHRENTZ & SE-
GETH
Kesslerplatz 1 Postfach 3055
W-8500 Nürnberg-1(DE)**

## Beschreibung

Die Erfindung betrifft ein Verfahren zur Herstellung eines Filtermaterials, bei dem auf einem offenporigen Schaumstoffträger bzw. an seiner Porenoberfläche kleinere und grössere Adsorberpartikel in getrennten Arbeitsgängen befestigt werden.

Ein derartiges Verfahren ist aus der DE-B-28 04 154 bekannt. Bei diesem Verfahren wird der Schaumstoffträger und die Oberfläche seiner Poren in einem ersten Arbeitsschritt mit Adsorberpartikeln versehen, die im Vergleich zum mittleren Porendurchmesser des Schaumstoffträgers sehr klein sind. Anschliessend werden in die Poren des Schaumstoffträgers zusätzlich poröse Adsorberpartikel eingelagert. Die Einlagerung dieser porösen Adsorberpartikel in Gestalt von Körnern, welche die Poren des Schaumstoffträgers weitgehend ausfüllen, erfolgt dadurch, dass die Adsorberkörner in den Schaumstoffträger mit einem gezielten Luftstrom eingeschossen werden. Die Befestigung der zuletzt genannten relativ grossen Adsorberkörner in den Poren erfolgt also primär durch ein Festklemmen. Diese Befestigungsart der relativ grossen Adsorberpartikel weist jedoch Mängel auf. Deshalb ist in der DE-B-28 04 154 auch beschrieben, dass es möglich wäre, den mit den relativ grossen porösen Adsorberpartikeln beschossenen Schaumstoffträger anschliessend mit einem schwachen Lösungsmittel zu durchtränken, das eine Erweichung der Oberfläche der Porenwände zur Folge hat, um die an die Porenwände angelagerten Adsorberkörner mit den Porenwänden zu verkleben. Die Befestigung der relativ grossen Adsorberkörner kann auch durch Thermofixierung erfolgen. Unabhängig von der Art der Befestigung der relativ grossen Adsorberpartikel in den Poren des offenporigen Schaumstoffträgers wird bei diesem bekannten Verfahren zuerst die Porenoberfläche mindestens teilweise mit den ersten Adsorberpartikeln belegt,wonach die relativ grossen Adsorberpartikel in die offenen Poren des Schaumstoffträgers eingebracht werden. Bedecken die ersten kleinen Adsorberpartikel die Oberfläche der Poren nicht vollständig, so lassen die Adsorptionseigenschaften des Filtermaterials noch Wünsche offen. Bedecken die ersten kleinen Adsorberpartikel die Oberfläche der Poren des offenporigen Schaumstoffträgers vollkommen, so ergeben sich wohl gute Adsorptionseigenschaften, dann liegen jedoch die zweiten grossen Adsorberpartikel entlang eines bestimmten Berührungsbereichs an den ersten kleinen Adsorberpartikeln an, so dass dieser Teil der ersten kleinen Adsorberpartikel für die Adsorption unwirksam bleibt. Ausserdem ist die Befestigung der grossen Adsorberpartikel an den kleinen Adsorberpartikeln mangelhaft.

Der Erfindung liegt deshalb die Aufgabe zugrunde, ein Verfahren der eingangs genannten Art zu schaffen, bei welchem die zum Einsatz gelangenden kleineren Adsorberpartikel nicht durch die grösseren ebenfalls zur Anwendung gelangende Adsorberpartikel bereichsweise bedeckt und somit unwirksam bleiben, und mit welchem ein Filtermaterial geschaffen wird, bei dem die grösseren Adsorberpartikel am Schaumstoffträger genauso sicher und gut befestigt sind,wie die kleineren Adsorberpartikel.

Diese Aufgabe wird erfindungsgemäss dadurch gelöst, dass der Schaumstoffträger mit einer Kleberschicht versehen wird, dass dann die grösseren Adsorberpartikel auf den bzw. in die offenen Poren des Schaumstoffträgers auf-bzw. eingebracht werden, und dass anschliessend auf den bzw. in die offenen Poren des Schaumstoffträgers bei noch nicht ausgehärteter Kleberschicht die kleineren Adsorberpartikel auf- bzw. eingebracht werden. Beim erfindungsgemässen Verfahren werden also im Gegensatz zum aus der DE-B-28 04 154 bekannten Verfahren nicht zuerst die kleinen Adsorberpartikel in die offenen Poren des Schaumstoffträgers eingebracht und anschliessend die grossen Adsorberpartikel, sondern zuerst die grossen Adsorberpartikel und anschliessend die kleinen zweiten Adsorberpartikel. Auf diese Weise können die kleinen zweiten Adsorberpartikel nur mehr die Flächenbereiche der offenen Poren des Schaumstoffträgers bedekken, die neben den Berührungsflächen zwischen den ersten grossen Adsorberpartikeln und der Porenoberfläche verbleiben. Auf diese Weise ergibt sich eine Materialersparnis der zweiten kleinen Adsorberpartikel, ohne dass die Adsorptionseigenschaften des mit dem erfindungsgemässen Verfahren hergestellten Filtermaterials beeinträchtigt werden. Ein erheblicher Vorteil besteht auch darin, dass bei dem nach dem erfindungsgemässen Verfahren hergestellten Filtermaterial die ersten grossen Adsorberpartikel auf dem bzw. in den offenen Poren des Schaumstoffträgers mechanisch fest und sicher fixiert sind. Da die Fixierung der ersten grossen Adsorberpartikel und der zweiten kleinen Adsorberpartikel an der die Porenoberfläche bedeckenden Kleberschicht unmittelbar aufeinanderfolgend geschieht, ist die Verbindung zwischen den kleinen Adsorberpartikeln und der Porenoberfläche genauso gut wie die Verbindung der grossen Adsorberpartikel mit der Porenoberfläche. Auf diese Weise ergibt sich eine gute Abriebfestigkeit des nach dem erfindungsgemässen Verfahren hergestellten Filtermaterials.

Beim erfindungsgemässen Verfahren werden vorzugsweise erste Adsorberpartikel verwendet, deren Korngrösse zwischen dem 0,1-fachen und dem 0,9-fachen des mittleren Porendurchmessers liegt, und anschliessend werden auf den bzw. in die offenen Poren des Schaumstoffträgers die zweiten Adsorberpartikel auf- bzw. eingebracht, die vorzugsweise pulver-oder puderförmig sind, bzw. eine kugelförmige Gestalt mit einem Durchmesser zwischen 0,05 und 1 μm besitzen. Die ersten Adsorberpartikel können eine kugelförmige Gestalt mit einem Durchmesser zwischen 0,1 und 0,9 mm aufweisen. Ein optimales Verhältnis von Adsorberauflage zu Adsorptionskinetik wird bei Verwendung von ersten Adsorberpartikeln erreicht, die einen Durchmesser von ca. 0,4 mm aufweisen.Die ersten Adsorberpartikel bestehen vorzugsweise aus Aktivkohle,deren innere Oberfläche zwischen ca.600 und ca.1400 m²g liegt, und die einen hohen Mesoporenanteil aufweist. Die zweiten kleinen Adsorberpartikel bestehen vorzugsweise aus einer hochaktiven Pulverkohle mit einer inneren Oberfläche von > 1000 m²g mit einem hohen Makroporenanteil. Die ersten grossen Adsorberpartikel weisen ein grosses Speichervermögen auf, ohne dass durch sie der Strömungswiderstand durch das Filtermaterial hindurch wesentlich erhöht wird. Die ersten grossen Adsorberpartikel vorzugsweise in Gestalt von Kugelkohle können mit Imprägnierungen ausgebildet sein, mit deren Hilfe Schadstoffe wie $NO_X$, $SO_2$ oder Giftgase abgebaut werden. Durch eine derartige Imprägnierung findet ausser der rein physikalischen Adsorption auch eine chemische Bindung bzw.katalytische Zersetzung der Schadstoffe statt.

Andererseits tritt durch eine derartige Imprägnierung der ersten grossen Adsorberpartikel keine nennenswerte Einschränkung der Adsorptionsleistung des Filtermaterials auf. Um auf den Anteil von Physisorption und Chemisorption bei einem derartigen Filtermaterial Einfluss zu nehmen,ist es auch möglich, imprägnierte erste grosse Adsorberpartikel mit nicht imprägnierten ersten grossen Adsorberpartikeln in den unterschiedlichsten Verhältnissen geeignet zu mischen.

Durch die pulverförmigen zweiten Adsorberpartikel, welche die neben den ersten grossen Adsorberpartikeln verbleibende Oberfläche der Poren bedecken, wird eine grosse chemisch aktive Filterfläche erzielt. Dadurch ergibt sich für die zu adsorbierenden gasförmigen Schadstoffe an den zweiten kleinen Adsorberpartikeln eine grosse Verweilzeit bzw. Kontaktzeit. Somit dienen die zweiten kleinen Adsorberpartikel für Schad- und/oder Geruchsstoffe als Zwischenspeicher. Mit diesen zweiten kleinen Adsorberpartikeln vorzugsweise in Gestalt pulverförmiger Aktivkohle können Konzentrationsänderungen von in der zu filtrierenden Luft vorhandenen belastenden Stoffe abgefangen und unter die Vergiftungs-bzw. Geruchsschwelle gedrückt werden.

Der Schaumstoffträger wird vorzugsweise mit dem Kleber getränkt, der getränkte Schaumstoffträger wird dann abgequetscht,wonach die ersten grösseren Adsorberpartikel und anschliessend die zweiten kleineren Adsorberpartikel auf den bzw. in die offenen Poren des Schaumstoffträgers auf-bzw. eingebracht werden.Auf diese Weise ist eine Imprägnierung des offenporigen Schaumstoffträgers möglich,wobei der Kleber die Porenoberfläche der Poren des Schaumstoffträgers schichtförmig mit einer definierten Schichtdicke bedeckt. An dieser Kleberschicht werden in einem ersten Arbeitsgang die ersten grossen Adsorberpartikel und in einem unmittelbar daran anschliessenden zweiten Arbeitsgang die zweiten kleinen Adsorberpartikel befestigt. Die Klebstoffschicht auf der Oberfläche des Schaumstoffträgers und auf der Oberfläche seiner Poren kann auch durch Sprühen, Foulardieren, Pflatschen oder durch Walzenauftrag erfolgen. Durch die Imprägnierung des offenporigen Schaumstoffträgers, bei dem es sich vorzugsweise um einen Polyurethan-Schaumstoff handelt, kann die Härte des Schaumstoffträgers bzw. die Härte des erfindungsgemäss hergestellten Filtermaterials eingestellt werden. Durch geeignete Einstellung der Härte des Schaumstoffträgers kann einerseits eine Deformierung des Schaumstoffträgers verhindert werden, und andererseits wird dadurch die Haftung der ersten grossen Adsorberpartikel weiter verbessert.

Das Aufbringen der ersten grossen und der zweiten kleinen Adsorberpartikel auf den Schaumstoffträger und das Einbringen der ersten und zweiten Adsorberpartikel in die Poren des offenporigen-Schaumstoffträgers kann dadurch erfolgen, dass man die ersten und die zweiten Adsorberpartikel jeweils aus einer bestimmten Fallhöhe auf den mit Kleber imprägnierten Schaumstoffträger fallen lässt. Die Anbringung der ersten und zweiten Adsorberpartikel kann auch dadurch erfolgen, dass die ersten und die zweiten Adsorberpartikel einerseits und der Schaumstoffträger andererseits während des Auf- bzw. Einbringens der Adsorberpartikel entgegengesetzt elektrostatisch aufgeladen werden. Die Belegung desSchaumstoffträgers mit den ersten grossen Adsorberpartikeln kann auch dadurch erfolgen, dass der Schaumstoffträger durch ein Bad hindurchbewegt wird, in dem sich die ersten grossen Adsorberpartikel befinden. Die ersten grossen Adsorberpartikel sind nur über einen geringen Flächenbereich ihrer Oberfläche, der grössenordnungsmässig bei 4 % liegt, mit der Porenoberfläche des Schaumstoffträgers verbunden. Damit wird sichergestellt, dass durch den Fixiervorgang, d.h. durch den Befestigungsvorgang die aktive freie Oberfläche der ersten Adsorberpartikel quasi nicht eingeschränkt wird. Andererseits ergibt sich jedoch eine sehr sichere und mechanisch feste Fixierung der ersten grossen Adsorberpartikel auf dem und in den Poren des offenporigen Trägermaterials. Die Belegung des bzw. der offenen Poren des Trägermaterials kann ausser durch elektrostatisches Bestreuen oder Aufstreuen auch durch Aufblasen oder durch definiertes Anschleudern erfolgen.

An der einer Adsorberpartikelquelle gegenüberliegenden Seite des Schaumstoffträgers kann während des Einbringens der ersten und der zweiten Adsorberpartikel ein Unterdruck angelegt werden. Durch diesen Unterdruck wird der Transport der Adsorberpartikel in den Schaumstoffträger hinein und durch den Schaumstoffträger hindurch verbessert, so dass eine noch gleichmässigere Verteilung der Adsorberpartikel im Inneren des offenporigen Schaumstoffträgers möglich ist. Das Anlegen eines Unterdrucks an der der Adsorberpartikelquelle gegenüberliegenden Seite des Schaumstoffträgers ist insbesondere während des Einbringens der zweiten kleinen Adsorberpartikel vorteilhaft, um überschüssiges Adsorberpartikelmaterial zurückgewinnen zu können. Zu diesem Zweck hat es sich als vorteilhaft erwiesen, dass die überschüssigen nicht im Schaumstoffträger festgehaltenen ersten und zweiten Adsorberpartikel nach einer Aufbereitung zur Entfernung anhaftenden Klebermaterials wieder in die entsprechenden Adsorberpartikelquellen zurückgeleitet werden.

Nach dem Einbringen der ersten und der zweiten Adsorberpartikel unterschiedlicher Korngrösse wird zweckmässig ein Trockungsprozess durchgeführt,wobei das Filtermaterial bei Temperaturen um 150°C eine Trocknungsvorrichtung durchläuft. Abschliessend erfolgt eine Endreinigung, bei welcher nicht auf dem bzw.in den Poren des offenporigen Schaumstoffträgers fixierte erste und/oder zweite Adsorberpartikel durch Absaugung vom Schaumstoffträger entfernt werden.

Als offenporiger Schaumstoffträger kann ein Polyurethanschaum verwendet werden, der eine Porengrösse von 15ppi bis 100ppi (= Poren pro inch) aufweist. Das entspricht einem mittleren Porendurchmesser im Bereich zwischen 1,0mm und 1,7mm. Durch die oben beschriebene Imprägnierung des Schaumstoffträgers können Flächengewichtsschwankungen des Schaumstoffträgers mindestens teilweise ausgeglichen werden, ohne dass durch diese Imprägnierung die Luftdurchlässigkeit verschlechtert, d.h. der Strömungswiderstand erhöht würde. Durch geeignete Wahl der Porengrösse bzw. der Verteilung bestimmter Porengrössen im offenporigen Schaumstoffträger kann Einfluss genommen werden auf die Auftragsmenge an Adsorbern, d.h. auf die Anteile zwischen den ersten grossen Adsorberpartikeln und den zweiten kleinen Adsorberpartikeln, und somit auf Parameter des Filtermaterials wie Luftdurchlässigkeit, Kontaktzeit der Schad-bzw. Geruchsstoffe an den Adsorberpartikeln, und auf die Filterkapazität.

Für die Imprägnierung des offenporigen Schaumstoffträgers stehen folgende Klebermaterialien zur Verfügung: Modifizierte Acrylate, Polyurethane, Silikonkautschuk, Polyvinylidene, Polyvinylchlorid, Polyamid, bzw. Polyestergranulate bzw. -pulver.

Das nach dem erfindungsgemässen Verfahren hergestellte Filtermaterial weist eine hohe Adsorptionskinetik, eine optimale Adsorberausnutzung, eine hohe Effizienz gegenüber Geruchs-und Schadstoffen durch die grosse Oberfläche der zur Anwendung gelangenden Adsorberpartikel, einen steuerbaren Strömungswiderstand durch geeignete Auswahl der mittleren Porengrösse bzw. des Verteilungsbereiches der mittleren Porengrösse des Schaumstoffträgers, eine hohe Unempfindlichkeit gegen Feuchtigkeit, eine lange Kontaktzeit zwischen den zu filternden Schadstoffen und den Adsorberpartikeln, einen geringen Druckabfall durch das Filtermaterial hindurch,d.h. eine hohe Luftdurchlässigkeit, und eine gute Unempfindlichkeit gegen Druckwechsel und Vibrationen auf. Vibrationen führen beim nach dem erfindungsgemässen Verfahren hergestellten Filtermaterial zu keiner Kanalbildung, da ein quasi selbstdichtendes Filtermaterial vorliegt. Das Filtermaterial besitzt eine hohe Abriebfestigkeit. Durch diese hohe Abriebfestigkeit sind nachgeschaltete Partikelfilter entbehrlich. Desgleichen ist die Gefahr von unwirksamen Totzonen im Filtermaterial gering. Das Filtermaterial kann selbsttragend ausgebildet sein, so dass ein durch Halterungen bedingter Druckabfall eliminiert ist. Das mit dem erfindungsgemässen Verfahren hergestellte Filtermaterial ist einfach an beliebige Einbaugegebenheiten anpassbar und weist einen geringen Platzbedarf auf. Die beim Filtermaterial zum Einsatz gelangenden Materialien sind physiologisch unbedenklich. Das vorzugsweise geruchsneutrale Filtermaterial weist eine geringe Feuchtigkeitsempfindlichkeit auf, woraus eine hohe Lebensdauer des Filtermaterials resultiert. Sein Einsatzbereich liegt zwischen -30°C und + 100°C.

Wird das nach dem erfindungsgemässen Verfahren hergestellte Filtermaterial einer thermischen Alterung unterzogen, so ist festzustellen, dass keine Änderung der Adsorberhaftung, keine Veränderung der mechanischen Eigenschaften wie der Reissfestigkeit und Dehnung, keine Änderung der Adsorptionsleistung, keine messbare Beeinflussung der Geruchseffizienz, keine bleibende Massänderung und keine messbare Änderung der Stauchhärte festzustellen sind. Bei höheren Temperaturen ist das Filtermaterial gegen einen Abrieb der Adsorberpartikel sogar noch widerstandsfähiger.

Das Filtermaterial kann bei der Zuluftfiltration von Fahrzeugen, zur Raumluftreinigung, bei Atemschutzmasken oder beiSchutzbekleidungen im zivilen oder militärischen Bereich Anwendung finden. Bei der Zuluftfiltration von Fahrzeugen dient das Filtermaterial zur Entfernung belästigender bzw.

gesundheitsgefährdender Bestandteile der Aussenluft vor ihrem Eintritt in den Fahrgastraum. Diese Bestandteile können $SO_2$, $NO_x$ bzw. Kohlenwasserstoffe sein.

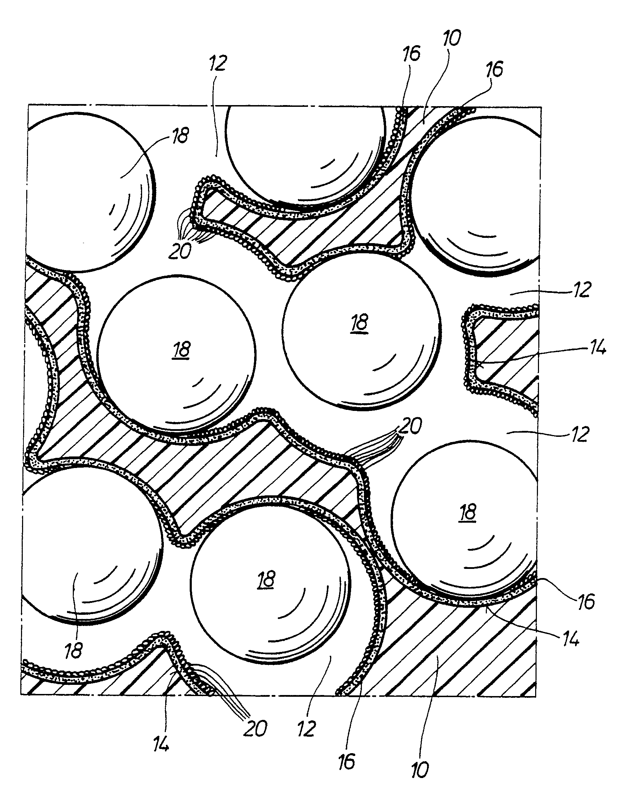

Ein Ausführungsbeispiel eines nach dem erfindungsgemässen Verfahren hergestellten Filtermaterials ist in der Zeichnung in einem stark vergrösserten Maßstab schematisch dargestellt und wird nachfolgend beschrieben.

Die Figur zeigt einen Ausschnitt aus einem stark vergrössert dargestellten Schaumstoffträger 10, bei dem es sich um einen offenporigen Polyurethanschaum handelt. Die Poren 12 des Schaumstoffträgers 10 sind miteinander bzw. mit der (nicht dargestellten) Aussenoberfläche des Schaumstoffträgers verbunden bzw. vernetzt. Die Oberfläche 14 der Poren 12 ist mit einer Kleberschicht 16 bedeckt, die durch Imprägnierung des Schaumstoffträgers 10 hergestellt wird. Nach der Ausbildung der Klebstoffschicht 16 werden auf den bzw. in die offenen Poren 12 des Schaumstoffträgers 10 erste Adsorberpartikel 18 eingebracht. Unmittelbar anschliessend werden auf den und in die offenen Poren 12 des Schaumstoffträgers 10 zweite Adsorberpartikel 20 eingebracht, die eine wesentlich kleinere Korngrösse aufweisen als die ersten Adsorberpartikel 18.

Der mittlere Durchmesser der Poren 12 kann beispielsweise zwischen 0,25 mm und 1,7 mm liegen, was einer Porengrösse von 15 ppi bis 100 ppi (= Poren pro inch) entspricht. Die ersten Adsorberpartikel 18 können bei einem Schaumstoffträger 10 der zuletzt beschriebenen Art einen Durchmesser von ca. 0,4 mm aufweisen. Die zweiten Adsorberpartikel 20 weisen eine Grösse auf, die unter 40 $\mu$m liegt. Insofern sind in der Zeichnung die Grössenverhältnisse selbstverständlich nicht aneinander angepasst richtig dargestellt. Die Figur soll nur verdeutlichen, dass sowohl die ersten Adsorberpartikel 18 als auch die zweiten Adsorberpartikel 20 mittels der Kleberbeschichtung 16 festhaftend am Schaumstoffträger 10 fixiert sind. Aus dieser Figur ist auch ersichtlich, dass in dem Bereich, in welchem die ersten grossen Adsorberpartikel 18 am Schaumstoffträger 10 befestigt sind, keine zweiten kleinen Adsorberpartikel 20 vorhanden sind, so dass sich eine Ersparnis an zweiten Adsorberpartikeln 20 ergibt, ohne dass die Filterwirkung des Filtermaterials darunter leidet.

In der Zeichnung ist der Berührungsbereich zwischen den Adsorberpartikeln 18 und dem Schaumstoffträger 10 grösser dargestellt als er tatsächlich ist. Wie bereits beschrieben wurde, beträgt dieser Berührungsbereich durch geeignete Auswahl der Grösse der Adsorberpartikel 18 und der Grösse des mittleren Durchmessers der Poren 12 nur ca. 4% der Oberfläche der Adsorberpartikel 18.

## Patentansprüche

1. Verfahren zur Herstellung eines Filtermaterials, bei dem auf einem offenporigen Schaumstoffträger (10) bzw. an seiner Porenoberfläche (14) kleinere und grössere Adsorberpartikel (18, 20) in getrennten Arbeitsgängen befestigt werden, **dadurch gekennzeichnet,** dass der Schaumstoffträger (10) mit einer Kleberschicht (16) versehen wird, dass dann die grösseren Adsorberpartikel (18) auf den bzw. in die offenen Poren (12) des Schaumstoffträgers auf- bzw eingebracht werden, und dass anschliessend auf den bzw. in die offenen Poren (12) des Schaumstoffträgers (10) bei noch nicht ausgehärteter Kleberschicht (16) die kleineren Adsorberpartikel (20) auf- bzw eingebracht werden.

2. Verfahren nach Anspruch 1, **dadurch gekennzeichnet,** dass grössere Adsorberpartikel (18) verwendet werden, deren Korngrösse zwischen dem 0,1-fachen und dem 0,9-fachen des mittleren Porendurchmessers liegt, und dass die anschliessend auf den bzw. in die offenen Poren (12) des Schaumstoffträgers (10) auf- bzw. eingebrachten kleineren Adsorberpartikel (20) pulver- bzw. puderförmig sind.

3. Verfahren nach Anspruch 1 oder 2, **dadurch gekennzeichnet,** dass die Kleberschicht (16) durch Imprägnieren erzeugt wird, dass der imprägnierte Schaumstoffträger (10) dann abgequetscht wird, wonach die grösseren Adsorberpartikel (18) und anschliessend die kleineren Adsorberpartikel (20) auf den bzw. in die offenen Poren (12) des Schaumstoffträgers (10) auf- bzw.eingebracht werden.

4. Verfahren nach mindestens einem der vorhergehenden Ansprüche, **dadurch gekennzeichnet,** dass man die grösseren und die kleineren Adsorberpartikel (18, 20) jeweils aus einer bestimmten Fallhöhe auf den mit der Kleberschicht (16) versehenen Schaumstoffträger (10) fallen lässt.

5. Verfahren nach mindestens einem der vorhergehenden Ansprüche, **dadurch gekennzeichnet,** dass die grösseren und die kleineren Adsorberpartikel (18, 20) einerseits und der Schaumstoffträger (10) andererseits während des Auf- bzw. Einbringens der Adsorberpartikel (18, 20) entgegengesetzt elektrostatisch aufgeladen werden.

6. Verfahren nach mindestens einem der vorher-

gehenden Ansprüche, **dadurch gekennzeich-net,** dass an der einer Adsorberpartikelquelle gegenüberliegenden Seite des Schaumstoffträgers (10) während des Einbringens der ersten und der zweiten Adsorberpartikel (18, 20) ein Unterdruck angelegt wird.

7. Verfahren nach mindestens einem der vorher-gehenden Ansprüche, **dadurch gekennzeich-net,** dass die überschüssigen nicht im Schaumstoffträger (10) festgehaltenen ersten und zweiten Adsorberpartikel (18, 20) nach einer Aufbereitung zur Entfernung anhaftenden Klebermaterials (16) erneut verwendet werden.

## Claims

1. A method for the manufacture of a filter material wherein smaller and larger adsorbing particles (18, 20) are affixed to an open pored foam carrier (10) or to its pore surface (14) in separate working steps,
characterized in that
the foam carrier (10) is provided with an adhesive layer (16), in that the larger adsorbing particles (18) are applied to or introduced into the open pores (12) of the foam carrier, and in that subsequently the smaller adsorbing particles (20) are applied to or introduced into the open pores (12) of the foam carrier (10) when the adhesive layer (16) has not yet set.

2. A method according to claim 1, characterized in that larger adsorbing particles (18) are used whose grain size lies between a multiple of 0.1 and 0.9 of the mean diameter, and in that the smaller adsorbing particles (20) subsequently applied to or introduced into the open pores (12) of the foam carrier (10) are powdery or pulverulent.

3. A method according to claim 1 or 2, characterized in that the adhesive layer (16) is produced by impregnation, in that the impregnated foam carrier (10) is then squeezed out, whereupon the larger adsorbing particles (18) and subsequently the smaller adsorbing particles (20) are applied to or introduced into the open pores (12) of the foam carrier (10).

4. A method according to at least one of the preceding claims, characterized in that the larger and smaller adsorbing particles (18, 20) are allowed to drop respectively from a specified drop height onto the foam carrier (10) provided with the adhesive layer (16).

5. A method according to at least one of the preceding claims, characterized in that the larger and smaller adsorbing particles (18, 20) on the one hand, and the foam carrier (10) on the other hand are provided with opposite electrostatic charges during the application or introduction of the adsorbing particles (18, 20).

6. A method according to at least one of the preceding claims, characterized in that on the side of the foam carrier (10) opposite an adsorbing particle source, low pressure is applied during the feeding of the first and second adsorbing particles (18, 20).

7. A method according to at least one of the preceding claims, characterized in that the superfluous first and second adsorbing particles (18, 20) not held in the foam carrier (10), are reused after being processed for removing the sticking adhesive material.

## Revendications

1. Procédé pour la fabrication d'un matériau filtrant, du type dans lequel sont fixées sur un support cellulaire à pores ouverts (10), c'est à dire sur la surface de ces pores (14) des particules adsorbantes petites et grosses (18,20) au cours d'étapes de travail séparées, caractérisé en ce que,
le support cellulaire (10) reçoit une couche de colle (16), les plus grosses particules adsorbantes (18) sont amenées sur, c'est à dire dans les pores ouverts (12) du support cellulaire (10) et enfin les plus petites particules adsorbantes (20) sont amenées sur, c'est à dire dans les pores ouverts (12) du support cellulaire (10) sur la couche de colle (16) non encore durcie.

2. Procédé selon la revendication 1, caractérisé en ce que l'on utilise de grosses particules adsorbantes (18) dont la grosseur de grain est comprise entre 0,1 et 0,9 fois le diamètre moyen des pores, et en ce que les petites particules adsorbantes (20) amenées ensuite sur, c'est à dire dans les pores (12) du support cellulaire (10) sont sous forme de poudre ou de poussière.

3. Procédé selon la revendication 1 ou 2, caractérisé en ce que la couche de colle (10) est obtenue par imprégnation, en ce que le support cellulaire (10) imprégné est ensuite essoré, à la suite de quoi les grosses particules adsorbantes (18) puis les petites particules adsorbantes (20) sont amenées sur, c'est à dire dans les pores ouverts (12) du support cellulaire (10).

4. Procédé selon au moins l'une des revendications précédentes, caractérisé en ce que l'on fait tomber les grosses et les petites particules adsorbantes (18,20), chacune d'une hauteur déterminée sur le support cellulaire (10) muni d'une couche de colle (16).

5. Procédé selon au moins l'une des revendications précédentes, caractérisé en ce que les grosses et les petites particules adsorbantes (18,20) d'une part et le support cellulaire (10) d'autre part, sont, au cours de l'amenée des particules adsorbantes (18,20), chargées électrostatiquement de charges opposées.

6. Procédé selon au moins l'une des revendications précédentes, caractérisé en ce que au cours de l'amenée des premières et secondes particules adsorbantes (18, 20), une sous-pression est appliquée à la face du support cellulaire (10) opposée à la source de particules adsorbantes.

7. Procédé selon au moins l'une des revendications précédentes, caractérisé en ce que les premières et les secondes particules adsorbantes (18,20) en excès, non fixées sur le support cellulaire (10) sont à nouveau utilisées après un traitement pour l'élimination de la colle qui y était restée attachée.